# EUROPEAN PATENT SPECIFICATION

(11) **EP 2 672 190 B1**
(45) Date of publication and mention of the grant of the patent: **05.08.2015**
(21) Application number: 13170714.3
(22) Date of filing: 05.06.2013
(51) Int. Cl.: F24F 3/00, F24F 3/044, F24F 5/00, F24F 12/00, F24D 5/12, F24D 11/02, F24D 17/02, F24H 4/02, F24H 4/04, F24H 6/00, F25B 13/00, F25B 29/00, F25B 25/00

(54) **Ambient air-conditioning unit for residential use**
Klimaanlageneinheit für Umgebungsluft zur Verwendung in Wohnungen
Unité de conditionnement d'air ambiant à usage résidentiel

(30) Priority: 05.06.2012 IT TV20120108
(43) Date of publication of application: 11.12.2013
(73) Proprietor: Clivet S.p.A., Feltre (IT)
(72) Inventor: Bello', Bruno, 36063 Marostica (IT)
(74) Representative: Boggio, Luigi

(56) References cited:
- WO-A1-81/00616
- WO-A1-84/02386
- WO-A1-2009/000974
- DE-A1- 10 058 273
- DE-A1- 19 702 903
- GB-A- 2 475 693
- US-A- 2 632 306

## Description

The present invention relates to an ambient air-conditioning unit for residential use according to preamble of claim 1.

More in detail, the present invention relates to a unit for ambient air-conditioning and for producing hot water for sanitary purposes with heat-pump technology, adapted to independently climate-control single dwellings smaller than 180 square meters. Use to which the following description will explicitly refer without this implying any loss of generality.

It is a known technology in the field of air-conditioning of large residential buildings the use of centralized heat-pump systems in which a large-sized single heat-pump system supplies hot and cold water to the radiators and/or convectors of all the domestic dwellings in the residential building. Document WO-A-2009/000974 discloses an ambient air-conditioning unit according to the preamble of claim 1.

More in details, the modern centralized heat-pump systems consist of a large heat-pump plant usually located in a common large technical space located near the residential building, and of a vast hydraulic circuit structured so as to channel the hot or cold water produced by the plant to the radiators and/or convectors of the single domestic dwellings.

The referred-above centralized heat-pump systems are furthermore provided with a complex network of metering devices which are used to meter the thermal energy consumption of each single domestic dwelling, which have a major impact on the overall costs of the centralized heat-pump system.

The current centralized systems are additionally designed to satisfy the sanitary-purpose hot water needs of all the domestic dwellings of the residential building.

Over the past years, the ever increasing attention devoted to the designing and building of new residential buildings has allowed to considerably increase the energy efficiency levels of the single domestic dwellings. This fact, combined with the drastic reduction of the average dimensions of the new domestic dwellings, has made the installation and management costs of the large centralized heat-pump systems no longer justifiable.

Aim of the present invention is to provide a compact system for the year-round ambient air-conditioning and for the integrated production of sanitary hot water with heat-pump technology, which is capable to effectively heat and cool a single small domestic dwelling, ensuring a high level of inside comfort in accordance to the required air renewal and a suitable production of hot water for sanitary purposes, all with energy efficiency calculated on a yearly basis higher than that of the centralized systems used until today.

In compliance with the above aim, according to the present invention there is provided an ambient air-conditioning unit for residential use as defined in claim 1 and preferably, though not necessarily, in any dependent claim.

The present invention will now be described with reference to the accompanying drawings, which show a non-limitative embodiment thereof, in which:
- Figure 1 is a perspective view of an ambient air-conditioning unit for residential use made according to the teachings of the present invention;
- Figure 2 is a schematic view of the ambient air-conditioning unit shown in figure 1; whereas
- Figures 3, 4 and 5 show the figure 1 ambient air-conditioning unit in three different operating modes.

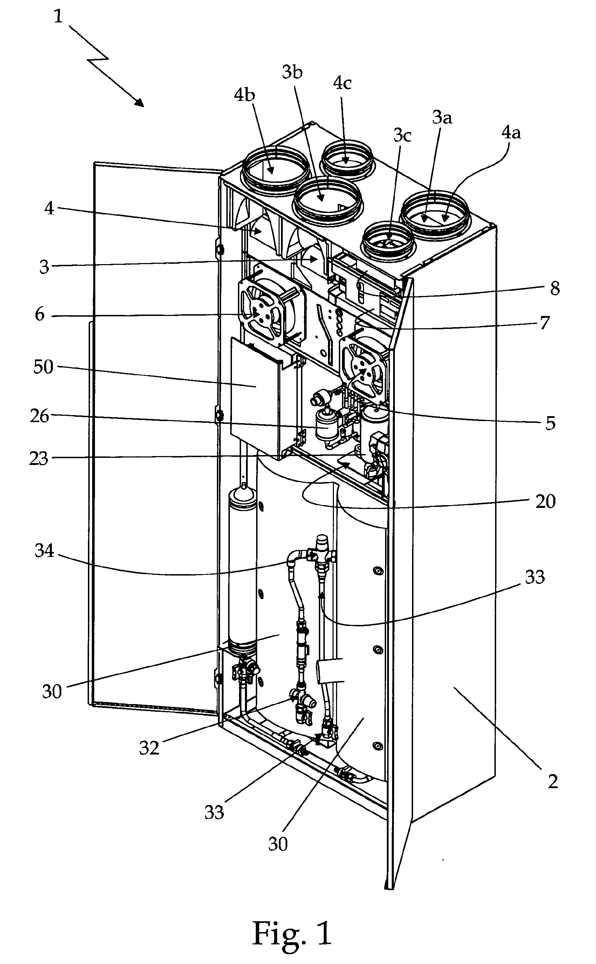

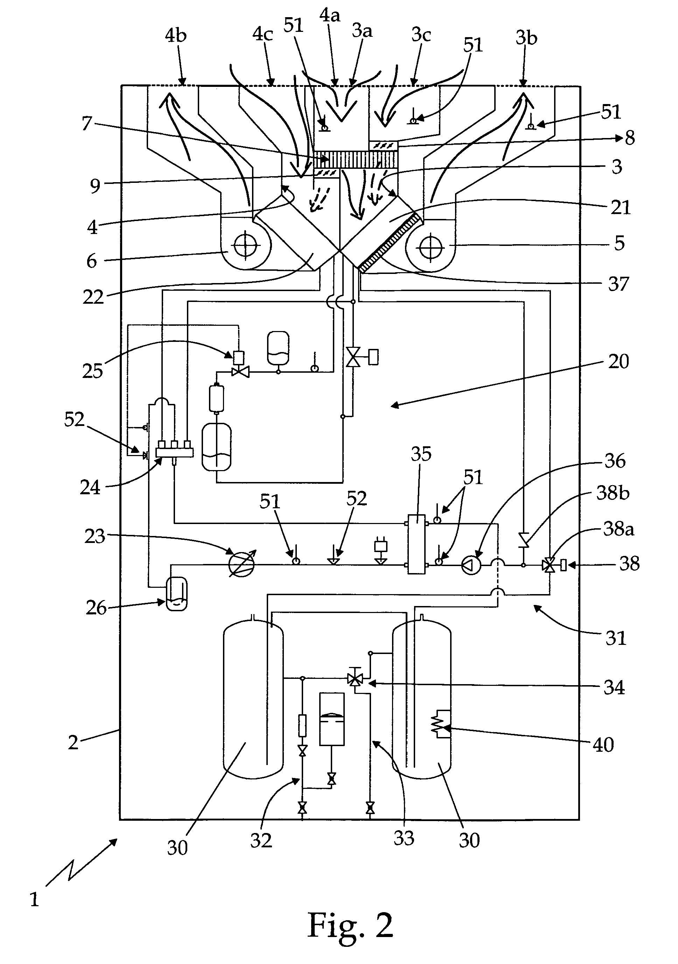

With reference to figures 1 and 2, numeral 1 indicates as a whole an ambient air-conditioning unit specifically structured for climate-controlling a small domestic dwelling with an extension preferably, though not necessarily, smaller than 180 square meters.

The ambient air-conditioning unit 1 comprises a preferably substantially parallelepiped-shaped, box-like outer casing 2 with self-bearing structure, which is dimensioned so as to be positioneable in one of the spaces/rooms in the domestic dwelling; and two air ducts 3 and 4 which are arranged within said box-like casing 2, preferably in the upper part of the same casing 2, and are structured so as to communicate with the outside each by means of a respective external-air suction mouth 3a, 4a, which is adapted to be placed in direct communication with the environment outside the perimeter of the domestic dwelling by means of a specific connection pipe (not shown).

In the example shown, in particular, the external-air suction mouths 3a and 4a of the air ducts 3 and 4 are preferably, though not necessarily, positioned/ realized on the box-like casing 2 one adjacent to the other, so as to be placed in direct communication with the environment outside the perimeter of the domestic dwelling by means of a single connection pipe (not shown).

Additionally, the air duct 3 is structured so as to communicate with the outside also by means of a treated-air delivery mouth 3b, which is adapted to be placed in direct communication with the spaces/rooms inside the perimeter of the domestic dwelling by means of a second connection pipe (not shown); and preferably, though not necessarily, also by means of a recyclable-internal-air suction mouth 3c, which is adapted to be placed in direct communication with one or more spaces/rooms inside the perimeter of the domestic dwelling by means of a third connection pipe (not shown).

Similarly, the air duct 4 is structured so as to communicate with the outside also by means of a foul-air exhaust mouth 4b, which is adapted to be placed in direct communication with the exterior of the domestic dwelling by means of a fourth connection pipe (not shown); and preferably, though not necessary also by means of a foul-internal-air suction mouth 4c, which is adapted to be placed in direct communication with the kitchen, the bathroom or bathrooms of the domestic dwelling and/or any other room in the perimeter of the domestic dwelling itself in which particularly unpleasant smells are released into the air, by means of a fifth connection pipe (not shown).

In other words, the box-like casing 2 is preferably provided with:
- a double external-air suction mouth 3a, 4a, which is adapted to be placed in direct communication with the environment outside the perimeter of the domestic dwelling by means of a first connection pipe (not shown);
- a treated-air delivery mouth 3b, which is adapted to be placed in direct communication with the space/room or spaces/rooms inside the perimeter of the domestic dwelling by means of a second connection pipe (not shown);

- a recyclable-internal-air suction mouth 3c, which is adapted to be placed in direct communication with the space/room or spaces/rooms inside the perimeter of the domestic dwelling by means of a third connection pipe (not shown);
- a foul-air exhaust mouth 4b, which is adapted to be placed in direct communication with the environment outside the perimeter of the domestic dwelling by means of a fourth connection pipe (not shown); and finally
- an internal-foul-air suction mouth 4c, which is adapted to be placed in direct communication with the room or rooms of the domestic dwelling which can release particularly unpleasant odors into the air, by means of a fifth connection pipe (not shown).

In the example shown, in particular, the box-like casing 2 is substantially parallelepiped in shape and has a height ranging from 160 to 270 cm, and a width ranging from 50 to 140 cm, and a depth ranging from 40 to 60 cm. Preferably the various mouths 3a, 4a, 3b, 4b, 3c, 4c are moreover located on the top of the box-like casing 2.

With reference to figures 1 and 2, the ambient air-conditioning unit 1 is further provided with two electrically-operated air circulation pumps 5 and 6 which are arranged inside the air ducts 3 and 4 so as to allow the air to circulate inside the same air ducts 3 and 4, and optionally also with an air filtering assembly 7 which is arranged along the air duct 3 so as to retain the impurities which are present in the air entering into the air duct 3.

More in detail, the air circulation pump 5 is arranged along the air duct 3, and is structured so as to generate an air flow that enters into the air duct 3 via the external-air suction mouth 3a and, if present, the recyclable-internal-air suction mouth 3c, and exits from the air duct 3 via the treated-air delivery mouth 3b. The air circulation pump 6 instead is arranged along the air duct 4, and is structured so as to generate an air flow that enters into the air duct 4 via the external-air suction mouth 4a and, if present, the foul-internal-air suction mouth 3c, and exits from the air duct 4 via the foul-air exhaust mouth 4b.

In the example shown, in particular, the air circulation pumps 5 and 6 preferably consist of two electrically-operated, adjustable-speed fans, which allow to adjust, in real time and separately from each other, the air flow circulating in the two air ducts 3 and 4.

Instead, the air filtering assembly 7 preferably, though not necessarily, consists of an high-efficiency electrostatic filter of known type. Preferably the air filtering assembly 7 is further structured to retain the impurities which are present in the air entering into the air duct 4 via the external-air suction mouth 4a.

Still with reference to figures 1 and 2, the ambient air-conditioning unit 1 is preferably, though not necessarily, also provided with two electrically-controlled throttle valves preferably of the shutter type or the like, hereinafter indicated by numerals 8 and 9, which are arranged one at the internal-air suction month 3c of air duct 3, and the other at the external-air suction mouth 4a of air duct 4.

The shutter valve 8 is adapted to adjust in real time the air flowrate entering into the air duct 3 via the internal-air suction mouth 3c. Instead, the shutter valve 9 is adapted to adjust in real time the air flowrate entering into the air duct 4 via external-air suction mouth 3c .

In addition to the above, the ambient air-conditioning unit 1 is moreover also provided with a reversible type, heat-pump circuit 20 which is structured so as to transfer heat from the air flowing through the air duct 3, to the air flowing through the air duct 4, or vice versa, subjecting a gaseous refrigerant to a closed thermodynamic cycle, such as for example the Carnot cycle. The fundamental thermodynamic principles that support a heat-pump circuit are widely known and therefore will not be furthermore described.

With reference to figures 1 and 2, the heat-pump circuit 20 is located inside the box-like casing 2 and basically comprises: two air/refrigerant heat exchangers 21 and 22 arranged along, respectively, the air duct 3 and the air duct 4; an electrically-operated refrigerant compressing device 23, which is adapted to increase the pressure and temperature of the gaseous refrigerant flowing through it, so as to provide on exit a high-temperature, high-pressure flow of gaseous refrigerant, i.e. preferably with pressure higher than 4-12 bar and temperature higher than 80°C; an electrically-operated four-way distributor 24 which is adapted to connect the refrigerant compressing device 23 to the heat exchangers 21 and 22; and finally a refrigerant expansion device 25, preferably electrically-operated too, which is interposed between the heat exchangers 21 and 22, and is structured so as to cause the rapid expansion of the refrigerant flowing from one heat exchanger 21, 22 to the other so as to complete the closed thermodynamic cycle.

Preferably the heat-pump circuit 20 is moreover additionally provided with an air-liquid separator 26 which is located immediately upstream of the refrigerant compressing device 23, so as to be crossed by the low-temperature, low-pressure refrigerant directed to the inlet of the refrigerant compressing device 23, and which is structured so as to only allow the gaseous refrigerant to reach the refrigerant compressing device 23.

More in detail, the air/refrigerant heat exchanger 21 is located inside the air duct 3, preferably immediately upstream of the air circulation pump 5, and is structured so that the air flowing inside the air duct 3 towards the treated-air delivery mouth 3b can, according to the difference of temperature between the two fluids, either give or subtract heat to or from the refrigerant thus either cooling down or heating up as a consequence.

The air/refrigerant heat exchanger 22 instead is located inside the air duct 4, preferably immediately upstream of the air circulation pump 6, and is structured so that the air flowing inside the air duct 4 towards the foul-air exhaust mouth 4b can, according to the difference of temperature between the two fluids, either give or subtract heat to or from the refrigerant, thus either cooling down or heating up as a consequence.

The refrigerant compressing device 23 is instead located inside the box-like casing 2 preferably under the air ducts 3 and 4, and is structured so as to continuously compress the gaseous refrigerant lowing through it, so that the temperature and pressure of the refrigerant at the outlet of the refrigerant compressing device 23 are much higher than the temperature and pressure that the refrigerant itself had at the inlet of the compressing device 23. The refrigerant compressing device 23 is preferably furthermore structured so as to vary/adjust, on command and in real time, the value of the flowrate of the gaseous-state refrigerant coming out from the same compressing device 23, between a predetermined maximum and minimum value.

More in detail, in the example shown, the refrigerant compressing device 23 preferably consists of a electrically-operated, adjustable-speed volumetric compressor 23 with a nominal power preferably lower than 2 kW, which is powered by means of a known type inverter.

With reference to Figure 2, the four-way electrically-operated distributor 24 is instead arranged between the two heat exchangers 21 and 22 and the refrigerant compressing device 23, and is structured so as to connect, on command, the delivery of the compressing device 23, as required and alternatively, to either of the heat exchangers 21 and 22, and the intake of the refrigerant compressing device 23 to the other of the two heat exchangers 21 and 22. In the example shown, in particular, the four-way distributor 24 preferably consists of an electrically-operated four-way valve.

Lastly the refrigerant expansion assembly 25 is interposed between the heat exchanger 21 and the heat exchanger 22, and is structured so as to subject the refrigerant flowing therethrough while flowing from heat exchanger 21 to heat exchanger 22, or vice versa, to a rapid expansion so that the pressure and temperature of the refrigerant at the inlet of heat exchanger 22 (or at the inlet of heat exchanger 21, if the flow is reversed) are lower than the pressure and temperature of the refrigerant at the outlet of heat exchanger 21 (or at the outlet of heat exchanger 22, if the flow is reversed).

The refrigerant compressing device 23, the four-way distributor 24, the refrigerant expansion assembly 25 and the air-liquid separator 26 are preferably located inside the box-like casing 2, immediately underneath the air ducts 3 and 4, i.e. in the central part of the box-like casing 2.

Furthermore, with reference to Figures 1 and 2, the ambient air-conditioning unit 1 also comprises at least one sanitary-water storage tank 30, which is located inside the box-like casing 2, preferably in the lower part of the box-like casing 2, and is structured/ dimensioned so as to contain an amount of water for sanitary purposes, i.e. drinkable water, higher than 20 liters, or rather higher than 50 liters, and preferably, though not necessarily, lower than 200 liters; and a sanitary-water heating circuit 31 which is arranged inside the box-like casing 2, and is structured so as to transfer heat from the refrigerant circulating in the heat-pump circuit 20 to the water contained in tank 30.

More in detail, the sanitary-water heating circuit 31 is preferably structured so as to extract heat from the refrigerant exiting from the refrigerant compressing device 23, and to transfer such a heat from the water contained in tank 30.

Additionally, the sanitary-water heating circuit 31 is also structured so as to selectively transfer heat from the water contained in tank 30 to the air flowing through the air duct 3, so as to heat, on command, the air coming out from the treated-air delivery mouth 3b of the air duct 3.

The ambient air-conditioning unit 1 is furthermore provided with a drinkable-water inlet line 32, which is adapted to connect the tank 30 to the branch of the hydraulic circuit of the domestic dwelling (not shown) that distributes the cold drinkable water arriving from the mains into the same domestic dwelling; and with a drinkable-water outlet line 33, which is adapted to connect the tank 30 to the branch of the hydraulic circuit of the domestic dwelling (not shown) that distributes the hot drinkable water, i.e. the hot water for sanitary purposes, within the same domestic dwelling.

The drinkable water inlet line 32 is structured so as to adjust the inflow of pressurized drinkable water at ambient temperature from the branch of the hydraulic circuit of the domestic dwelling (not shown) that distributes the cold drinkable water from the mains to tank 30, so as to keep tank 30 preferably always completely full of drinkable water.

The drinkable water outlet line 33 is structured so as to adjust the outflow of the hot drinkable water from tank 30 to the branch of the hydraulic circuit of the domestic dwelling (not shown) that distributes the hot drinkable water, i.e. the hot water for sanitary purposes.

The ambient air-conditioning unit 1 is preferably moreover provided with a preferably, though not necessarily, electrically-operated, thermostatic mixer 34 or other similar device, which is arranged along the drinkable water outlet line 33, is connected also to the drinkable water inlet line 32, and is structured so as to automatically mix the hot drinkable water coming out from tank 30 through the drinkable water outlet line 33 with the cold drinkable water coming arriving from the water mains through the drinkable water inlet line 32, so that the hot water entering into the branch of the hydraulic circuit of the domestic dwelling (not shown) that distributes the hot drinkable water, i.e. the hot water for sanitary purposes, does not exceed a predetermined limit temperature preferably, though not necessarily, equal to 55°C.

In the example shown, in particular, tank 30 preferably, though not necessarily, consists of two preferably substantially cylindrical-shaped, watertight containers which are connected in a cascade to each other, and the drinkable-water inlet and outlet lines 32 and 33 are preferably connected each to a respective watertight container. The two watertight containers are preferably furthermore provided with an external heat-insulating lining capable of minimizing heat losses.

With reference to Figure 2, the heating circuit 31 comprises: a water/refrigerant heat exchanger 35, which is located along the heat-pump circuit 20, preferably immediately downstream of the delivery of the refrigerant compressing device 23, so as to be crossed by the high-pressure, high-temperature refrigerant flowing from the refrigerant compressing device 23 to the four-way distributor 24; a series of pipelines adapted to connect the heat exchanger 35 to tank 30; and an electrically-operated water circulation pump 36 which, on command, is able to circulate the drinkable water of tank 30 through the heat exchanger 35, so that the drinkable water can subtract heat from the high-pressure, high-temperature refrigerant coming out from the refrigerant compressing device 23, heating up as a consequence.

In the example shown, in particular, the sanitary-water heating circuit 31 is preferably structured so as to introduce the heated drinkable water arriving from the heat exchanger 35 into the watertight container which is connected to the drinkable hot-water outlet line 33, and to extract the to-be-heated drinkable water directed to the heat exchanger 35 from the watertight container which is connected to the drinkable cold-water inlet line 32.

With reference to Figure 2, the sanitary-water heating circuit 31 is finally provided with an additional air/water heat exchanger 37 which is located inside the air duct 3, preferably close to the air/ refrigerant heat exchanger 21; and with an electrically-operated valve assembly 38 which, on command, can connect the heat exchanger 37 in series/cascade to the heat exchanger 35, so that the drinkable water from tank 30 is forced to circulate in rapid sequence through the two heat exchangers 35 and 37 before returning into tank 30.

In the example shown, in particular, the valve assembly 38 preferably comprises a three-way valve 38a, which is arranged along the pipeline connecting tank 30 to the inlet of the heat exchanger 35, and is oriented so as to have the inlet facing the tank 30, and one of the two outlets connected to the inlet of the circulation pump 36. The second outlet of the three-way valve 38a is instead connected to the inlet of the heat exchanger 37, while the outlet of the heat exchanger 37 is connected to the inlet of the circulation pump 36, downstream of the three-way valve 38a, preferably with the interposition of a one-way valve 38b oriented so as to allow only the flow of water from the heat exchanger 37 to the inlet of the circulation pump 36.

Preferably, though not necessarily, the ambient air-conditioning unit 1 is moreover provided with an electrically-operated sanitary-water heating device 40, which is structured so as to heat the drinkable water contained inside tank 30 additionally or alternatively to the sanitary-water heating circuit 31.

In the example shown, the sanitary-water heating device 40 preferably consists of a resistor housed inside tank 30, or rather in the container connected to the drinkable hot-water feeding line 33.

With reference to figures 1 and 2, the ambient air-conditioning unit 1 is finally provided with an electronic control unit 50, which is located inside the box-like casing 2, and is adapted to control the air circulation pumps 5 and 6, the shutter valves 8 and 9, the inverter of compressor 23, the four-way distributor 24, the circulation pump 36, the three-way valve 38a, the sanitary-water heating device 40, according to the signals arriving from a series of temperature sensors 51 and/or pressure sensors 52 appropriately distributed in the unit.

In the example shown, in particular, the ambient air-conditioning unit 1 is preferably, though not necessarily, provided with three temperature sensors 51 located at the external-air suction mouth 3a, at the treated-air delivery mouth 3b, and at the recyclable-internal-air suction mouth 3c; with two temperature sensors 51 located at the water inlet and outlet of the water/refrigerant heat exchanger 37; and with two pressure sensors 52 located along the heat-pump circuit 20, one at the compressor outlet 23, and the other downstream of the refrigerant compressing device 23.

In use, the electronic control unit 50 controls the various components of the ambient air-conditioning unit 1 so as to maintain, around a predetermined value freely settable by the user, the temperature of the air inside the domestic dwelling that houses the ambient air-conditioning unit 1, while at same time producing water for sanitary purposes. This all while simultaneously trying to maximize energy efficiency of the ambient air-conditioning unit 1.

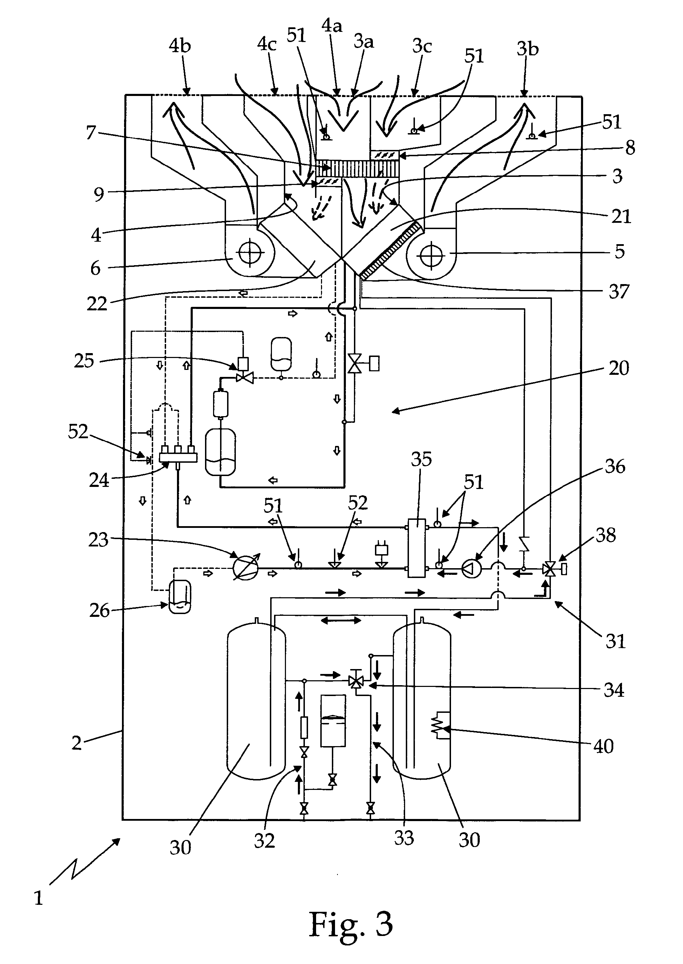

More in detail, with reference to Figure 3 in the cold season, the electronic control unit 50 configures the heat-pump circuit 20 so as to transfer heat from the air circulating in the air duct 4 to the air circulating in the air duct 3, so as to introduce into the domestic dwelling air which is warmer than outside air, while also heating the drinkable water contained in tank 30.

In this configuration, the electronic control unit 50 keeps the compressor 23 always working, varying its speed as a function of the amount of heat which must be transferred from the air circulating in the air duct 4, to the air circulating in the air duct 3. The amount of heat transferred in fact depends on the amount of refrigerant which is circulated in the heat-pump circuit 20 in the unit of time.

Additionally, the electronic control unit 50 may appropriately mix the cold air which is aspirated from the outside, with the hot air that returns to the air ducts 3 and 4 through, respectively, the recyclable-internal-air suction mouth 3c and the foul-internal-air suction mouth 4c, so as to maximize the heat exchange with heat exchangers 21 and 22.

The electronic control unit 50 furthermore adjusts the refrigerant temperature at the outlet of compressor 23 and the flowrate of circulation pump 36 of sanitary-water heating circuit 31, so as to bring and keep the temperature of the hot water contained in tank 30 to the highest possible value.

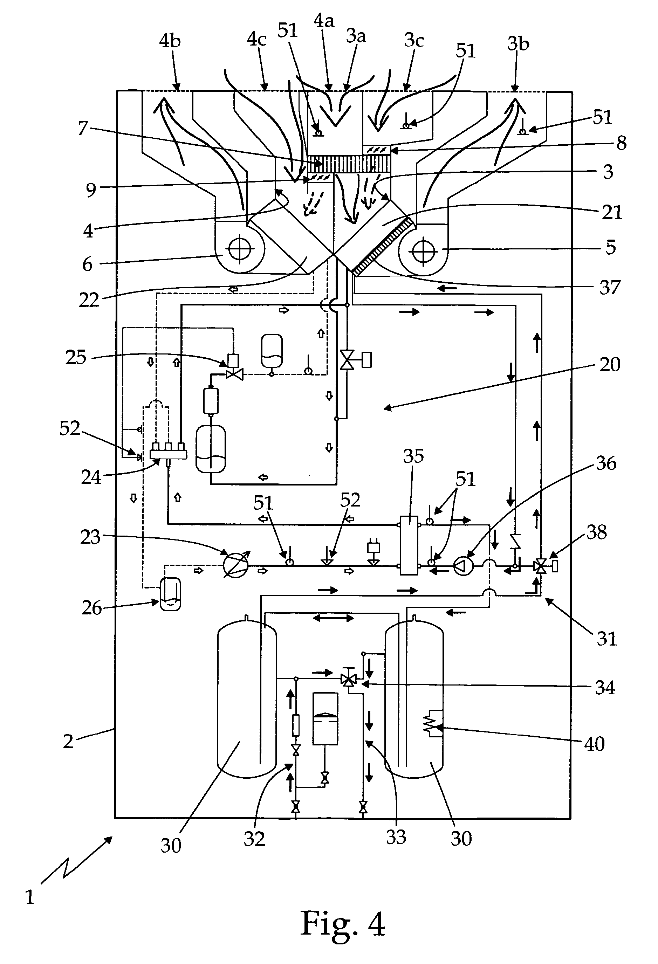

With reference to Figure 4, if the request of heat to be transferred to the air duct 3 is momentarily higher than the capacities of the heat-pump circuit 20, the electronic control unit 50 actuates the three-way valve 38a so as to put the heat exchanger 37 in series with the heat exchanger 35. Thereby, the air/water heat exchanger 37 may transfer heat from the drinkable water contained in tank 30 to the air coming out from the air duct 3 via the treated-air delivery mouth 3b.

In other words, the electronic control unit 50 uses the high-temperature drinkable water mass contained in tank 30 as thermal flywheel to compensate for the thermal power peaks required to heat the domestic dwelling.

The electronic control unit 50 may furthermore use the heat stored in the high-temperature drinkable water contained in tank 3 to face the heat requests for heating the domestic dwelling whenever the heat-pump 20 is not operating, i.e. when compressor 23 is off. This situation very often occurs in intermediate seasons when the temperature of the air inside the domestic dwelling is substantially equal to the average external temperature.

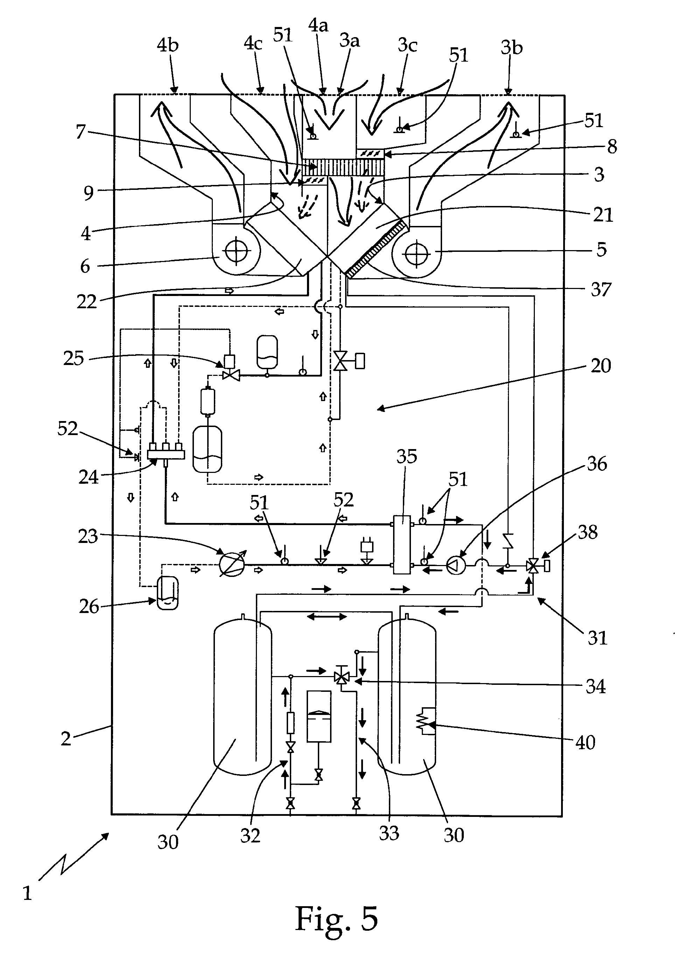

With reference to Figure 5 in the hot season, instead, the electronic control unit 50 configures the heat-pump circuit 20 so as to transfer heat from the air circulating in the air duct 3 to the air circulating in the air duct 4, so as to introduce air which is colder than outside air into the domestic dwelling, while also heating the drinkable water contained in the tank 30.

By virtue of its particular structure, the ambient air-conditioning unit 1 ensures several advantages.

Firstly, the direct heating and cooling of the air which is introduced into the domestic dwelling, i.e. the elimination of an intermediate heat carrier, allows to significantly improve the energy efficiency of the unit. Furthermore, this peculiarity allows to simplify the hydraulic circuit of the domestic dwelling with the savings that this implies.

The ambient air-conditioning unit 1 is furthermore structured to recover heat from the hot air leaving the domestic dwelling to the hot air entering into the domestic dwelling thus greatly increasing the overall energy efficiency. Moreover, the mixing, in the air duct 4, of the cold air arriving from the outside and the foul hot air coming out from the domestic dwelling allows to increase the temperature of the air which directly touches the heat exchanger 22, thus greatly improving the heat transfer from the air to the refrigerant in winter.

Moreover, the fact that tank 30 is formed by two watertight containers connected to each other in cascade favors the layering of the hot water in tank 30, thus allowing the heating circuit 31 to take hot water from tank 30 in the point where it has approximately the lower temperature, and to re-introduce the hot water into tank 30 in the point where it has approximately the higher temperature.

The presence of the thermostatic mixer 34 straddling the drinkable water inlet line 32 and the drinkable water outlet line 33 further allows to completely disconnect the maximum temperature of the water in tank 30 from the delivery limit temperature of the hot water for sanitary purposes, thus allowing the drinkable water contained in tank 30 to reach temperatures even higher than 70-80°C. Possibility that translates into a better storage of thermal energy in the ambient air-conditioning unit 1. Thermal energy that may be obviously rapidly transferred, if needed, to the air which is introduced into the domestic dwelling, thus avoiding to temporarily activate or increase the flowrate of the compressor 23 of the heat-pump circuit.

Last, but not least importantly, the ambient air-conditioning unit 1 can stably maintain the required temperature in the domestic dwelling with particularly low energy consumption, with all the advantages that this implies.

It is finally apparent that changes and variations can be made to the ambient air-conditioning unit 1 described herein without departing from the scope of the present invention as disclosed by the appended claims.

For example, in a less sophisticated embodiment, the inlet and outlet on water side of air/water heat exchanger 37 of the sanitary-water heating circuit 31 could be directly connected to tank 30. In this case, the sanitary-water heating circuit 31 also comprises a second electrically-operated water circulation pump, which is interposed between the heat exchanger 37 and the tank 30, and is able to circulate, on command, the hot drinkable water of tank 30 through the heat exchanger 37, without obviously affecting the heat exchanger 35, so as to transfer heat from the drinkable water contained in tank 30 to the air circulating in the air duct 3.

## Claims

1. Ambient air-conditioning unit (1) for small domestic dwellings, of the type comprising an external box-like casing (2) and two air ducts (3, 4) arranged within said box-like casing (2); the first air duct (3) being provided with an external-air suction mouth (3a) which is adapted to be placed in communication with the environment outside the perimeter of the domestic dwelling, and a treated-air delivery mouth (3b) which is adapted to be placed in communication with the spaces/ rooms within the perimeter of said domestic dwelling; the ambient air-conditioning unit (1) further comprising
- a heat-pump circuit (20) which is housed within the box-like casing (2), and is structured so as to transfer heat from the air flowing through the first air duct (3) to the air flowing through the second air duct (4), or vice versa; and
- a sanitary-water storage tank (30) which is located within the box-like casing (2), and is structured/ dimensioned so as to contain drinkable water;
a sanitary-water heating circuit (31) which is arranged within the box-like casing (2), and is structured so as to transfer heat from the refrigerant circulating in the heat-pump circuit (20) to the water contained within the sanitary-water storage tank (30); the ambient air-conditioning unit (1) being **characterized in that** the second air duct (4) is equipped with an external-air suction mouth (4a) which is adapted to be placed in communication with the environment outside the perimeter of the domestic dwelling, and a foul-air exhaust mouth (4b) which is adapted to be placed in communication with the environment outside the perimeter of the domestic dwelling; and the sanitary heating circuit (31) is structured so as to selectively transfer heat from the water contained within the sanitary-water storage tank (30) to the air which flows through the first air duct (3).

2. Ambient air-conditioning unit according to Claim 1, **characterized in that** the sanitary-water heating circuit (31) comprises: a water/refrigerant heat exchanger (35) located along the heat-pump circuit (20); a series of pipes able to connect the water/refrigerant heat exchanger (35) to the sanitary-water storage tank (30); a water circulation pump (36) which is capable of circulating the water contained in the sanitary-water storage tank (30) through the water/refrigerant heat exchanger (35); and an air/water heat exchanger (37) which is located within the first air duct (3), and is adapted to be crossed by the water contained in the sanitary-water storage tank (30).

3. Ambient air-conditioning unit according to Claim 2, **characterized in that** the sanitary-water heating circuit (31) also comprises an electrically-operated valve assembly (38) which, on command, is able to connect the air/water heat exchanger (37) in series/ cascade to the water/refrigerant heat exchanger (35), so that the water contained in the sanitary-water storage tank (30) circulates in both heat exchangers (35, 37) before returning into the sanitary-water storage tank (30).

4. Ambient air-conditioning unit according to any one of the preceding claims, **characterized in that** the heat-pump circuit (20) comprises: two air/refrigerant heat exchangers (21, 22) located respectively along the first (3) and the second air duct(4); an electrically-operated refrigerant compressing device (23); an electrically-operated four-way distributor (24), which is able to connect the refrigerant compressing device (23) to the two air/refrigerant heat exchangers (21, 22); and finally a refrigerant expansion device (25), which is interposed between the two air/refrigerant heat exchangers (21, 22), and is structured so as to cause the quick expansion of the refrigerant that flows from one air/refrigerant heat exchanger (21, 22) to the other.

5. Ambient air-conditioning unit according to Claim 4, **characterized in that** the water/refrigerant heat exchanger (35) of the sanitary-water heating circuit (31) is located immediately downstream of the delivery of the refrigerant compressing device (23), so as to be crossed by the high-pressure and high-temperature refrigerant flowing from the refrigerant compressing device (23) towards the four-way distributor (24).

6. Ambient air-conditioning unit according to Claim 4 or 5, **characterized in that** the refrigerant compressing device (23) is structured so as to be able to vary, on command, the flow-rate value of the refrigerant that circulates in the heat-pump circuit (20).

7. Ambient air-conditioning unit according to any one of the preceding claims, **characterized by** also comprising a drinkable-water inlet line (32) which is adapted to connect the sanitary-water storage tank (30) to the branch of the hydraulic circuit of the domestic dwelling that supplies, within said domestic dwelling, the cold drinkable water arriving from the water mains; a drinkable-water outlet line (33) which is adapted to connect the sanitary-water storage tank (30) to the branch of the hydraulic circuit of the domestic dwelling which supplies the hot drinkable water within said domestic dwelling; and a thermostatic mixer or the like (34) which bridges the drinkable-water inlet line (32) and the drinkable-water outlet line (33), and is structured so as to mix the hot drinkable water coming out of the sanitary-water storage tank (30) through the drinkable-water outlet line (33), with the cold drinkable water arriving from the water mains through the drinkable-water inlet line (32), so that the hot water which enters the branch of the hydraulic circuit of the domestic dwelling supplying the hot drinkable water, does not exceed a given temperature limit.

8. Ambient air-conditioning unit according to any one of the preceding claims, **characterized in that** the sanitary-water storage tank (30) comprises two watertight containers which are connected in cascade to one another.

9. Ambient air-conditioning unit according to any one of the preceding claims, **characterized in that** the first air duct (3) is provided also with a recyclable-internal-air suction mouth (3c) which is adapted to be placed in communication with one or more spaces/rooms within the domestic dwelling.

10. Ambient air-conditioning unit according to any one of the preceding claims, **characterized in that** the second air duct (4) is provided also with a foul-internal-air suction mouth (3c) which is adapted to be placed in communication with several specific rooms within the domestic dwelling.

11. Ambient air-conditioning unit according to any one of the preceding claims, **characterized in that** it also comprises a first air circulation pump (5) arranged within the first air duct (3), and a second air circulation pump (6) arranged within the second air duct (4).

12. Ambient air-conditioning unit according to any one of the preceding claims, **characterized by** also comprising an air filtering assembly (7) which is located along the first air duct (3) so as to retain the impurities which are present in the air entering into the first air duct (3).

13. Ambient air-conditioning unit according to Claim 12, **characterized in that** the air filtering assembly (7) is an electrostatic filter.

14. Ambient air-conditioning unit according to any one of the preceding claims, **characterized in that** the sanitary-water storage tank (30) is structured/ dimensioned so as to contain a quantity of drinkable water which is greater than 20 litres.

15. Ambient air-conditioning unit according to any one of the preceding claims, **characterized in that** the external box-like casing (2) is dimensioned so as to be positionable in one of the spaces/rooms within the domestic dwelling.

## Patentansprüche

1. Umgebungsluftkonditionierungseinheit (1) für kleine Privatwohnungen von der Art, welche umfasst: ein externes kastenartiges Gehäuse (2) und zwei innerhalb des kastenartigen Gehäuses (2) angeordnete Luftkanäle (3, 4); wobei der erste Luftkanal (3) mit einer Ansaugöffnung (3a) für Außenluft versehen ist, die mit der Umgebung außerhalb des Perimeters der Privatwohnung in Verbindung bringbar ist, und mit einer Auslassöffnung (3b) für behandelte Luft, die mit den Räumen/Räumlichkeiten innerhalb des Perimeters der Privatwohnung in Verbindung bringbar ist;
die Umgebungsluftkonditionierungseinheit (1) ferner umfassend:
- einen Wärmepumpenkreislauf (20), welcher innerhalb des kastenartigen Gehäuses (2) aufgenommen und dazu konstruiert ist, Wärme von der den ersten Luftkanal (3) durchströmenden Luft auf die den zweiten Luftkanal (4) durchströmende Luft oder umgekehrt zu übertragen; und
- einen Sanitärwasserspeichertank (30), welcher innerhalb des kastenartigen Gehäuses (2) angeordnet und dazu konstruiert/bemessen ist, Trinkwasser aufzunehmen;
- einen Sanitärwasserheizkreislauf (31), welcher innerhalb des kastenartigen Gehäuses (2) angeordnet ist und dazu konstruiert ist, Wärme von dem in dem Wärmepumpenkreislauf (20) zirkulierenden Kältemittel auf das innerhalb des Sanitärwasserspeichertanks (30) aufgenommene Wasser zu übertragen;
wobei die Umgebungsluftkonditionierungseinheit (1) **dadurch gekennzeichnet ist, dass** der zweite Luftkanal (4) mit einer Ansaugöffnung (4a) für Außenluft ausgestattet ist, die mit der Umgebung außerhalb des Perimeters der Privatwohnung in Verbindung bringbar ist, und mit einer Schlechtluftabzugsöffnung (4b), die mit der Umgebung außerhalb des Perimeters der Privatwohnung in Verbindung bringbar ist, und dass der Sanitärheizkreislauf (31) dazu konstruiert ist, selektiv Wärme von dem innerhalb des Sanitärwasserspeichertanks (30) aufgenommenen Wasser auf die den ersten Luftkanal (3) durchströmende Luft zu übertragen.

2. Umgebungsluftkonditionierungseinheit nach Anspruch 1, **dadurch gekennzeichnet, dass** der Sanitärwasserheizkreislauf (31) umfasst: einen Wasser/Kältemittel-Wärmetauscher (35), welcher entlang dem Wärmepumpenkreislauf (20) angeordnet ist; eine Serie von Rohren, welche dazu in der Lage sind, den Wasser/Kältemittel-Wärmetauscher (35) mit dem Sanitärwasserspeichertank (30) zu verbinden; eine Wasserzirkulationspumpe (36), welche dazu in der Lage ist, das in dem Sanitärwasserspeichertank (30) aufgenommene Wasser durch den Wasser/ Kältemittel-Wärmetauscher (35) hindurch zu zirkulieren; und einen Luft/Wasser-Wärmetauscher (37), welcher innerhalb des ersten Luftkanals (3) angeordnet ist und von dem in dem Sanitärwasserspeichertank (30) aufgenommenen Wasser durchquerbar ist.

3. Umgebungsluftkonditionierungseinheit nach Anspruch 2, **dadurch gekennzeichnet, dass** der Sanitärwasserheizkreislauf (31) ferner eine elektrisch betriebene Ventilanordnung (38) umfasst, welche dazu in der Lage ist, auf Befehl den Luft/Wasser-Wärmetauscher (37) in Reihe/Kaskade mit dem Wasser/Kältemittel-Wärmetauscher (35) zu schalten, so dass das in dem Sanitärwasserspeichertank (30) aufgenommene Wasser in beiden Wärmetauschern (35, 37) zirkuliert, bevor es in den Sanitärwasserspeichertank (30) zurückkehrt.

4. Umgebungsluftkonditionierungseinheit nach einem der voranstehenden Ansprüche, **dadurch gekennzeichnet, dass** der Wärmepumpenkreislauf (20) umfasst: zwei Luft/Kältemittel-Wärmetauscher (21, 22), welche entlang dem ersten Luftkanal (3) bzw. entlang dem zweiten Luftkanal (4) angeordnet sind; eine elektrisch betriebene Kältemittelverdichtungseinrichtung (23); einen elektrisch betriebenen Vier-Wege-Verteiler (24), welcher dazu in der Lage ist, die Kältemittelverdichtungseinrichtung (23) mit den beiden Luft/Kältemittel-Wärmetauschern (21, 22) zu verbinden; und schließlich eine Kältemittelexpansionseinrichtung (25), welche zwischen die beiden Luft/Kältemittel-Wärmetauscher (21, 22) zwischengeschaltet ist und dazu konstruiert ist, die schnelle Expansion des Kältemittels, welches von einem Luft/Kältemittel-Wärmetauscher (21, 22) zum anderen strömt, zu bewirken.

5. Umgebungsluftkonditionierungseinheit nach Anspruch 4, **dadurch gekennzeichnet, dass** der Wasser/Kältemittel-Wärmetauscher (35) des Sanitärwasserheizkreislaufs (31) unmittelbar stromabwärts des Auslasses der Kältemittelverdichtungseinrichtung (23) angeordnet ist, um von dem Hochdruck- und Hochtemperaturkältemittel, welches von der Kältemittelverdichtungseinrichtung (23) in Richtung zu dem Vier-Wege-Verteiler (24) strömt, durchquert zu werden.

6. Umgebungsluftkonditionierungseinheit nach Anspruch 4 oder 5, **dadurch gekennzeichnet, dass** die Kältemittelverdichtungseinrichtung (23) dazu konstruiert ist, auf Befehl den Wert der Durchflussrate des Kältemittels, welches in dem Wärmepumpenkreislauf (20) zirkuliert, verändern zu können.

7. Umgebungsluftkonditionierungseinheit nach einem der voranstehenden Ansprüche, **dadurch gekennzeichnet, dass** sie ferner umfasst: eine Trinkwassereinlassleitung (32), mittels welcher der Sanitärwasserspeichertank (30) mit dem Zweig des Hydraulikkreislaufs der Privatwohnung, der das von dem Wasserversorgungsnetz her kommende kalte Trinkwasser innerhalb der Privatwohnung zuführt, verbindbar ist; eine Trinkwasserauslassleitung (33), mittels welcher der Sanitärwasserspeichertank (30) mit dem Zweig des Hydraulikkreislaufs der Privatwohnung, der das warme Trinkwasser innerhalb der Privatwohnung zuführt, verbindbar ist; und einen thermostatischen Mischer (34) oder dergleichen, welcher die Trinkwassereinlassleitung (32) und die Trinkwasserauslassleitung (33) überbrückt und dazu konstruiert ist, das über die Trinkwasserauslassleitung (33) aus dem Sanitärwasserspeichertank (30) kommende warme Trinkwasser mit dem über die Trinkwassereinlassleitung (32) von dem Wasserversorgungsnetz her kommenden kalten Trinkwasser zu mischen, so dass das Warmwasser, welches in den Zweig des Hydraulikkreislaufs der Privatwohnung eintritt, der das warme Trinkwasser zuführt, eine gegebene Temperaturgrenze nicht überschreitet.

8. Umgebungsluftkonditionierungseinheit nach einem der voranstehenden Ansprüche, **dadurch gekennzeichnet, dass** der Sanitärwasserspeichertank (30) zwei wasserdichte Behälter umfasst, welche in Kaskade miteinander verbunden sind.

9. Umgebungsluftkonditionierungseinheit nach einem der voranstehenden Ansprüche, **dadurch gekennzeichnet, dass** der erste Luftkanal (3) ferner mit einer Ansaugöffnung (3c) für rezyklierbare Innenluft versehen ist, welche mit einem oder mehreren Räumen/Räumlichkeiten innerhalb der Privatwohnung in Verbindung bringbar ist.

10. Umgebungsluftkonditionierungseinheit nach einem der voranstehenden Ansprüche, **dadurch gekennzeichnet, dass** der zweite Luftkanal (4) ferner mit einer Ansaugöffnung (3c) für schlechte Innenluft versehen ist, welche mit mehreren bestimmten Räumen innerhalb der Privatwohnung in Verbindung bringbar ist.

11. Umgebungsluftkonditionierungseinheit nach einem der voranstehenden Ansprüche, **dadurch gekennzeichnet, dass** sie ferner eine erste Luftzirkulationspumpe (5), welche innerhalb des ersten Luftkanals (3) angeordnet ist, und eine zweite Luftzirkulationspumpe (6), welche innerhalb des zweiten Luftkanals (4) angeordnet ist, umfasst.

12. Umgebungsluftkonditionierungseinheit nach einem der voranstehenden Ansprüche, **dadurch gekennzeichnet, dass** sie ferner eine Luftfilteranordnung (7) umfasst, welche entlang dem ersten Luftkanal (3) angeordnet ist, um die Verunreinigungen, welche in der in den ersten Luftkanal (3) eintretenden Luft vorhanden sind, zurückzuhalten.

13. Umgebungsluftkonditionierungseinheit nach Anspruch 12, **dadurch gekennzeichnet, dass** die Luftfilteranordnung (7) ein elektrostatisches Filter ist.

14. Umgebungsluftkonditionierungseinheit nach einem der voranstehenden Ansprüche, **dadurch gekennzeichnet, dass** der Sanitärwasserspeichertank (30) dazu konstruiert/bemessen ist, eine Menge an Trinkwasser aufzunehmen, die größer ist als 20 Liter.

15. Umgebungsluftkonditionierungseinheit nach einem der voranstehenden Ansprüche, **dadurch gekennzeichnet, dass** das externe kastenartige Gehäuse (2) dazu bemessen ist, in einem/einer der Räume/Räumlichkeiten innerhalb der Privatwohnung positionierbar zu sein.

## Revendications

1. Unité de conditionnement d'air ambiant (1) pour de petites unités d'habitation, du type comprenant une enveloppe en forme de boîte externe (2) et deux conduits d'air (3, 4) agencés à l'intérieur de ladite enveloppe en forme de boîte (2) ; le premier conduit d'air (3) étant prévu avec une bouche d'aspiration d'air externe (3a) qui est adaptée pour être placée en communication avec l'environnement à l'extérieur du périmètre de l'unité d'habitation, et une bouche de distribution d'air traité (3b) qui est adaptée pour être placée en communication avec les espaces/pièces à l'intérieur du périmètre de ladite unité d'habitation ;
l'unité de conditionnement d'air ambiant (1) comprenant en outre :
- un circuit de pompe à chaleur (20) qui est logé à l'intérieur de l'enveloppe en forme de boîte (2), et est structuré afin de transférer la chaleur de l'air s'écoulant à travers le premier conduit d'air (3) à l'air s'écoulant à travers le second conduit d'air (4), ou vice versa ; et
- un réservoir de stockage d'eau sanitaire (30) qui est positionné à l'intérieur de l'enveloppe en forme de boîte (2), et est structuré/dimensionné afin de contenir de l'eau potable ;
- un circuit de chauffage d'eau sanitaire (31) qui est agencé à l'intérieur de l'enveloppe en forme de boîte (2), et est structuré afin de transférer la chaleur du réfrigérant circulant dans le circuit de pompe à chaleur (20) à l'eau contenue à l'intérieur du réservoir de stockage d'eau sanitaire (30) ;
l'unité de conditionnement d'air ambiant (1) étant **caractérisée en ce que** le second conduit d'air (4) est équipé avec une bouche d'aspiration d'air externe (4a) qui est adaptée pour être placée en communication avec l'environnement à l'extérieur du périmètre de l'unité d'habitation, et une bouche d'évacuation d'air vicié (4b) qui est adaptée pour être placée en communication avec l'environnement à l'extérieur du périmètre de l'unité d'habitation, et le circuit de chauffage sanitaire (31) est structuré pour transférer sélectivement la chaleur de l'eau contenue à l'intérieur du réservoir de stockage d'eau sanitaire (30) à l'air qui s'écoule à travers le premier conduit d'air (3).

2. Unité de conditionnement d'air ambiant selon la revendication 1, **caractérisée en ce que** le circuit de chauffage d'eau sanitaire (31) comprend : un échangeur de chaleur eau/réfrigérant (35) positionné le long du circuit de pompe à chaleur (20) ; une série de tuyaux capables de raccorder l'échangeur de chaleur eau/réfrigérant (35) au réservoir de stockage d'eau sanitaire (30) ; une pompe de circulation d'eau (36) qui est capable de faire circuler l'eau contenue dans le réservoir de stockage d'eau sanitaire (30) par le biais de l'échangeur de chaleur eau/réfrigérant (35) ; et un échangeur de chaleur air/eau (37) qui est positionné à l'intérieur du premier conduit d'air (3), et est adapté pour être traversé par l'eau contenue dans le réservoir de stockage d'eau sanitaire (30).

3. Unité de conditionnement d'air ambiant selon la revendication 2, **caractérisée en ce que** le circuit de chauffage d'eau sanitaire (31) comprend également un ensemble de valve actionné électriquement (38) qui, sur commande, est capable de raccorder l'échangeur de chaleur air/eau (37) en série/cascade à l'échangeur de chaleur eau/réfrigérant (35), de sorte que l'eau contenue dans le réservoir de stockage d'eau sanitaire (30) circule dans les deux échangeurs de chaleur (35, 37) avant de revenir dans le réservoir de stockage d'eau sanitaire (30).

4. Unité de conditionnement d'air ambiant selon l'une quelconque des revendications précédentes, **caractérisée en ce que** le circuit de pompe à chaleur (20) comprend : deux échangeurs de chaleur d'air/réfrigérant (21, 22) respectivement positionnés le long du premier (3) et du second conduit d'air (4) ; un dispositif de compression de réfrigérant actionné électriquement (23) ; un distributeur à quatre voies actionné électriquement (24), qui est capable de raccorder le dispositif de compression de réfrigérant (23) aux deux échangeurs de chaleur d'air/réfrigérant (21, 22) ; et finalement un dispositif d'expansion de réfrigérant (25) qui est intercalé entre les deux échangeurs de chaleur air/réfrigérant (21, 22) et est structuré afin de provoquer l'expansion rapide du réfrigérant qui s'écoule d'un échangeur de chaleur air/réfrigérant (21, 22) à l'autre.

5. Unité de conditionnement d'air ambiant selon la revendication 4, **caractérisée en ce que** l'échangeur de chaleur eau/réfrigérant (35) du circuit de chauffage d'air sanitaire (31) est positionné immédiatement en aval de la distribution du dispositif de compression de réfrigérant (23), afin d'être traversé par le réfrigérant à haute pression et haute température s'écoulant à partir du dispositif de compression de réfrigérant (23) vers le distributeur à quatre voies (24).

6. Unité de conditionnement d'air ambiant selon la revendication 4 ou 5, **caractérisée en ce que** le dispositif de compression de réfrigérant (23) est structuré afin de pouvoir modifier, sur commande, la valeur de débit du réfrigérant qui circule dans le circuit de pompe à chaleur (20).

7. Unité de conditionnement d'air ambiant selon l'une quelconque des revendications précédentes, **caractérisée en ce qu'**elle comprend également une conduite d'entrée d'eau potable (32) qui est adaptée pour raccorder le réservoir de stockage d'eau sanitaire (30) à la ramification du circuit hydraulique de l'unité d'habitation qui fournit, dans ladite unité d'habitation, l'eau potable froide arrivant du réseau d'eau ; une conduite de sortie d'eau potable (33) qui est adaptée pour raccorder le réservoir de stockage d'eau sanitaire (30) à la ramification du circuit hydraulique de l'unité d'habitation qui fournit l'eau potable chaude à l'intérieur de ladite unité d'habitation ; et un mélangeur thermostatique ou similaire (34) qui fait la liaison entre la conduite d'entrée d'eau potable (32) et la conduite de sortie d'eau potable (33), et est structuré afin de mélanger l'eau potable chaude sortant du réservoir de stockage d'eau sanitaire (30) par la conduite de sortie d'eau potable (33), avec l'eau potable froide arrivant du réseau d'eau par la conduite d'entrée d'eau potable (32), de sorte que l'eau chaude qui pénètre dans la ramification du circuit hydraulique de l'unité d'habitation fournissant l'eau potable chaude, ne dépasse pas une limite de température donnée.

8. Unité de conditionnement d'air ambiant selon l'une quelconque des revendications précédentes, **caractérisée en ce que** le réservoir de stockage d'eau sanitaire (30) comprend deux conteneurs étanches à l'eau qui sont raccordés en cascade entre eux.

9. Unité de conditionnement d'air ambiant selon l'une quelconque des revendications précédentes, **caractérisée en ce que** le premier conduit d'entrée (3) est prévu également avec une bouche d'aspiration d'air interne recyclable (3c) qui est adaptée pour être placée en communication avec un ou plusieurs espaces/pièces à l'intérieur de l'unité d'habitation.

10. Unité de conditionnement d'air ambiant selon l'une quelconque des revendications précédentes, **caractérisée en ce que** le second conduit d'air (4) est prévu également avec une bouche d'aspiration d'air interne vicié (3c) qui est adaptée pour être placée en communication avec plusieurs pièces spécifiques à l'intérieur de l'unité d'habitation.

11. Unité de conditionnement d'air ambiant selon l'une quelconque des revendications précédentes, **caractérisée en ce qu'**elle comprend en outre une première pompe de circulation d'air (5) agencée à l'intérieur du premier conduit d'air (3), et une seconde pompe de circulation d'air (6) agencée à l'intérieur du second conduit d'air (4).

12. Unité de conditionnement d'air ambiant selon l'une quelconque des revendications précédentes, **caractérisée en ce qu'**elle comprend également un ensemble de filtration d'air (7) qui est positionné le long du premier conduit d'air (3) afin de retenir les impuretés qui sont présentes dans l'air pénétrant dans le premier conduit d'air (3).

13. Unité de conditionnement d'air ambiant selon la revendication 12, **caractérisée en ce que** l'ensemble de filtration d'air (7) est un filtre électrostatique.

14. Unité de conditionnement d'air ambiant selon l'une quelconque des revendications précédentes, **caractérisée en ce que** le réservoir de stockage d'eau sanitaire (30) est structuré/dimensionné afin de contenir une quantité d'eau potable qui est supérieure à 20 litres.

15. Unité de conditionnement d'air ambiant selon l'une quelconque des revendications précédentes, **caractérisée en ce que** l'enveloppe en forme de boîte externe (2) est dimensionnée pour pouvoir être positionnée dans l'un des espaces/pièces à l'intérieur de l'unité d'habitation.
